# EUROPEAN PATENT APPLICATION

(11) **EP 3 168 741 A1**
(43) Date of publication of application: **17.05.2017**
(21) Application number: 15306813.5
(22) Date of filing: 16.11.2015
(51) Int. Cl.: G06F 9/44

(54) **METHOD OF DISPLAYING A GRAPHICAL USER INTERFACE COMPRISING HIERARCHICAL GRAPHICAL OBJECTS AND APPARATUS PERFORMING THE SAME**

(71) Applicant: Thomson Licensing, 92130 Issy-les-Moulineaux (FR)
(72) Inventor: Drexler, Michael, 30989 Gehrden (DE); Winter, Marco, 30659 Hannover (DE)
(74) Representative: Huchet, Anne

(57) **Abstract**

A method, a computer readable storage medium and an apparatus (900) for displaying a graphical user interface are described. The graphical user interface includes hierarchical graphical objects. A first set of graphical objects associated with an upper hierarchical level is displayed. A selection of one of the displayed graphical objects is detected. In response to the selection, a second set of graphical objects associated with a lower hierarchical level is displayed which replaces at least a portion of the selected graphical object of the first set of graphical objects.

## Description

### TECHNICAL FIELD

The present disclosure relates to a method and an apparatus for displaying a graphical user interface comprising hierarchical graphical objects. In addition, a computer readable medium suitable for such a method and an apparatus is also disclosed.

### BACKGROUND

Existing graphical user interface (GUI) for displaying a hierarchical list can be inefficient and inconvenient to use, especially when the hierarchical list becomes larger and comprises a huge amount of list objects and when the size of the display device is limited.

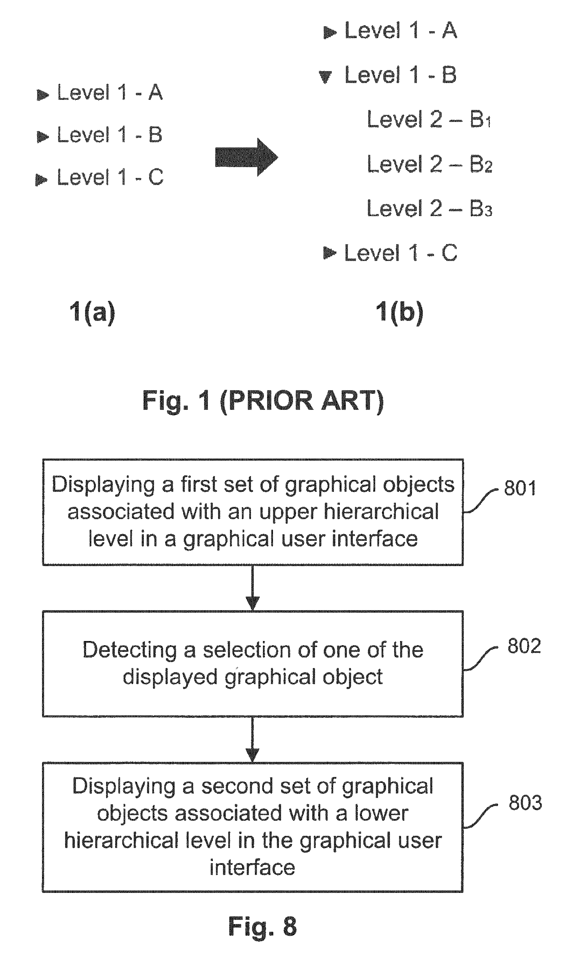

Fig. 1 schematically illustrates an exemplary classical GUI for displaying a hierarchical list including two levels of objects. Fig. 1(a) shows a collapsed mode of the GUI, where only the top level (Level 1) data are displayed and visible. Using the arrow showed on the left hand side of the objects, the GUI can be expanded into an expanded mode, as shown in Fig. 1(b), where both levels (Levels 1 and 2) of the list are visible. In the case of Fig. 1, the Level 2 objects shown in Fig. 1(b) are indented.

In this kind of GUI, it requires more space on the display device to show the whole hierarchical list when the list becomes larger and includes several levels of objects. For example, for N objects of Level 2, N+1 lines are necessarily required to show all the objects in the expanded mode, where the one more line is used to display the parent top level. A larger display device connected to a desktop computer might be feasible to show such a long hierarchical list. However, it is impractical and redundant for today's common mobile gadgets to show such list. An improved and more effective way to display the hierarchical list is desirable.

### SUMMARY

It is an object to provide an improved solution for displaying a graphical user interface comprising hierarchical graphical objects.

According to one embodiment, a method of displaying a graphical user interface comprising hierarchical graphical objects is proposed. The hierarchical graphical objects comprise a first set of graphical objects associated with an upper hierarchical level and a second set of graphical objects associated with a lower hierarchical level. The method comprises: displaying the first set of graphical objects; detecting a selection of one of the displayed graphical objects; and in response to the selection, displaying the second set of graphical objects, wherein the second set of graphical objects replaces at least a portion of the selected and displayed graphical object of the first set of graphical objects.

In one embodiment, the hierarchical graphical objects have a tree structure. The first set of graphical objects represents a group of nodes of the tree structure that are at a same upper level, and the second set of graphical objects represents a group of nodes of the tree structure that are at a same lower level arranged as a child of the upper level.

In one embodiment, each of the graphical objects comprises a selectable icon. The selection of one of the displayed graphical objects is performed by a selection of the respective selectable icon associated with the selected graphical object. In response to the selection of the respective selectable icon, at least one characteristic of the selected icon is accordingly changed. Particularly, the at least one characteristic is visual characteristic related to the visual appearance of the selected icon.

In one embodiment, each of the graphical objects is a selectable icon. The selection of one of the displayed graphical objects is performed by a selection of the respective selectable graphical object.

According to one embodiment, an apparatus is proposed which comprises a graphical user interface configured to display hierarchical graphical objects. The hierarchical graphical objects comprise a first set of graphical objects associated with an upper hierarchical level and a second set of graphical objects associated with a lower hierarchical level. Upon detection of a selection of one of the first set of graphical objects displayed in the graphical user interface, the second set of graphical objects is displayed to replace at least a portion of the selected graphical object of the first set of graphical objects.

In one embodiment, the apparatus further comprises an operation unit (901) configured to provide an access to a hierarchical dataset associated with the hierarchical graphical objects displayed in the graphical user interface. Each of the hierarchical graphical objects represents one data item in the hierarchical dataset. Optionally, the apparatus further comprises a storage unit configured to store the hierarchical dataset.

With respect to the apparatus, there are same or similar aspects and advantages applicable, which have been already mentioned with respect to the method according to aspects of the invention. Merely to omit unnecessary explanations and repetitions, these are not mentioned here.

Also, a computer readable storage medium has stored therein instructions for displaying a graphical user interface comprising hierarchical graphical objects, which, when executed by a computer, cause the computer to: display a first set of the hierarchical graphical objects associated with an upper hierarchical level; detect a selection of one of the displayed graphical objects; and in response to the selection, display a second set of the hierarchical graphical objects associated with a lower hierarchical level, wherein the second set of graphical objects replaces at least a portion of the selected graphical object of the first set of graphical objects.

The computer readable storage medium can be a non-transitory volatile or non-volatile storage medium, such as, for example, a hard disk, an optical or magnetic disk or tape, a solid state memory device, etc. The storage medium thus tangibly embodies a program of instructions executable by a computer or a processing device to perform program steps as described herein.

Further characteristics of the present solution will become apparent from the description of the embodiments together with the claims and the included drawings. Embodiments can fulfill individual characteristics or a combination of several characteristics.

### BRIEF DESCRIPTION OF THE DRAWINGS

- Fig. 1: shows an example of a conventional graphical user interface known in the technical field.
- Fig. 2: shows one embodiment of a graphical user interface introduced in the present principles, where the graphical objects are associated with two hierarchical levels.
- Fig. 3: shows another embodiment of a graphical user interface introduced in the present principles, where the graphical objects are associated with three hierarchical levels.
- Fig. 4: shows another embodiment of a graphical user interface introduced in the present principles, where the graphical objects include a different selectable icon.
- Fig. 5: shows another embodiment of a graphical user interface introduced in the present principles, where the graphical user interface includes additional selectable icons.
- Fig. 6: shows another embodiment of a graphical user interface introduced in the present principles, where a second set of graphical objects replaces a part of a first set of graphical objects.
- Fig. 7(a): schematically illustrates an exemplary embodiment where the graphical user interfaces described in Fig. 6 is applied on an exemplary mobile device.
- Fig. 7(b): schematically illustrates an exemplary embodiment where a graphical user interface according to the present principles is applied to show data items.
- Fig. 8: is a flow chart schematically illustrating one embodiment of a method of displaying a graphical user interface comprising graphical objects.
- Fig. 9: is a schematic diagram depicting one embodiment of an apparatus introduced in the present principles.

### DETAILED DESCRIPTION OF PREFERRED EMBODIMENTS

For a better understanding the proposed solutions shall now be explained in more detail in the following description with reference to the figures. It is understood that the solutions are not limited to the disclosed exemplary embodiments and that specified features can also expediently be combined and/or modified without departing from the scope of the proposed solutions as defined in the appended claims.

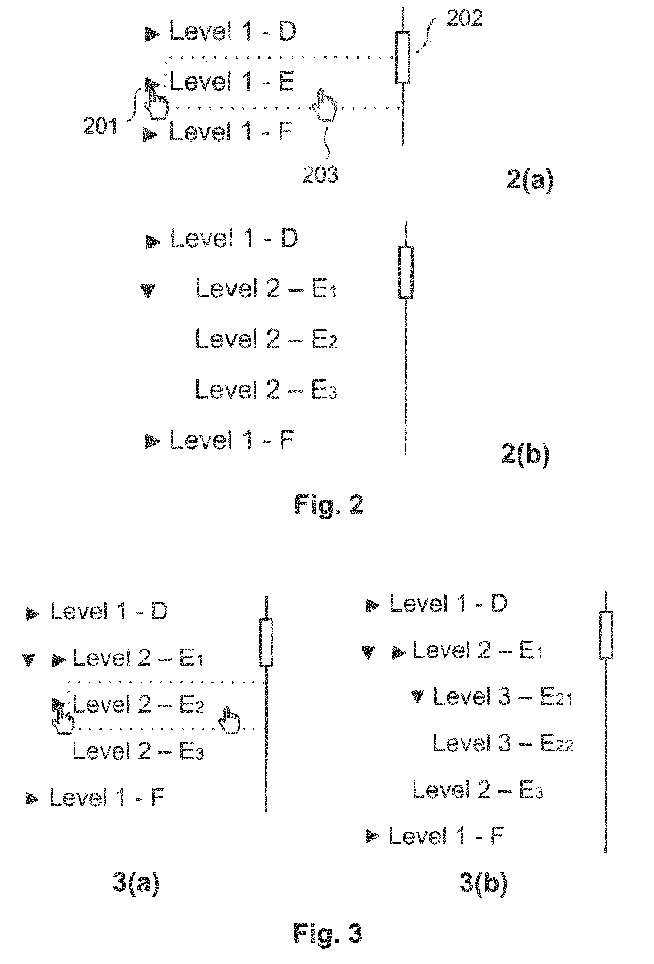

Referring to Fig. 2, an embodiment of a graphical user interface in the present principles is illustrated. The graphical user interface includes hierarchical graphical objects, e.g. "Level 1-D" and "Level 1-E", and is exemplarily set to include two hierarchical levels of the graphical objects here for the purpose of clear and brief explanation. It should be understood that the hierarchical graphical objects can of course include several hierarchical levels that can be arbitrarily decided and shown in the graphical user interface.

Fig. 2(a) shows a set of graphical objects that are associated with an upper hierarchical level, among which three of the objects, "Level 1-D", "Level 1-E" and "Level 1-F", are displayed in the graphical user phase along a vertical orientation. On the left hand side of the graphical objects, an arrow 201 is shown to indicate that there exist selectable and expandable graphical objects associated with a lower hierarchical level. In addition, a scroll bar 202 shown on the right hand side indicates that there are actually more graphical objects in the list of this upper hierarchical level. The whole list can be seen and displayed if a user scrolls up or down along the list using the scroll bar. Of course, the graphical user interface shown here is merely an exemplary illustration for explaining the present principles, other icons or buttons used for various functions and operations can of course be integrated in the graphical user interface and are omitted here merely to reduce the complexity of the drawings.

Fig. 2(b) shows the graphical user interface after a selection of the graphical object "Level 1-E". The selection of a certain graphical object can be optionally performed via an icon included in the certain graphical object or any other feasible methods. As shown in Fig. 2(a), the selection can be performed, for example, by a selection of the arrow next to the object "Level 1-E". Alternatively, when applied on a mobile device or a touch panel, the selection of the graphical object can be activated by a user selecting the display area showing "Level 1-E". In other words, the graphical object itself, e.g. the display area showing the graphical object, can be a selectable icon. In addition, a cursor 203 or any another symbol, such as a mouse pointer, which is feasible in such graphical user interface can be used to assist a user for the selection.

Once the selection is activated, the appearance of the selected arrow is changed to show and indicate the selection such that a user can clearly see and be reminded which graphical object is selected. In Fig. 2(b), the orientation of the arrow 201 is changed to show that the graphical object "Level 1-E" is selected. In alternative, other characteristics of the arrow, particularly visual characteristics, such as the color, the size, the transparency, etc., can also be chosen as the indication of the selection.

Upon selection of one of the graphical objects associated with the upper hierarchical level, a set of graphical objects associated with a lower hierarchical level are shown and displayed. As illustrated in Fig. 2(b), three graphical objects with the lower hierarchical level, "Level 2-E₁", "Level 2-E₂" and "Level 2-E₃", are displayed, which especially replaces the previously shown and selected graphical object "Level 1-E". Of course, the list of the graphical objects with the lower hierarchical level can be longer. The exemplary illustration here is simplified to have a clear explanation about the present principles.

The graphical objects associated with the lower hierarchical level can be optionally shown in a same or different formality as those with the upper hierarchical level. By using this improved graphical user interface, the display space required for the hierarchical graphical objects or a hierarchical list is reduced. With the help of the arrow or any other alternative icons, the graphical user interface can remain clear and simple even when the hierarchical list become larger and includes multiple levels.

In one embodiment, the hierarchical graphical objects can be understood as having a tree structure. The set of the graphical objects associated with the upper hierarchical level represent a group of nodes of the tree structure, which are at a same upper level. Correspondingly, the set of the graphical objects associated with the lower hierarchical level represent another group of nodes of the tree structure, which are at a same lower level and are arranged as a child of the upper level. For example, in Fig. 2(b), the graphical objects "Level 2-E₁", "Level 2-E₂" and "Level 2-E₃" are arranged as the children of the selected graphical object "Level 1-E" of the upper level.

Fig. 3 shows another embodiment in which the hierarchical graphical objects are associated with three different hierarchical levels. Similarly, a selection of the graphical object "Level 2-E₂" associated with the lower hierarchical level is performed upon selection of the associated arrow or the displayed graphical object itself. In response to the selection, further graphical objects associated with an even lower hierarchical level (e.g. a third level) such as "Level 3-E₂₁" and "Level 3-E₂₁" are shown and displayed to replace the selected graphical object associated with the second hierarchical level, as shown in Fig. 3(b).

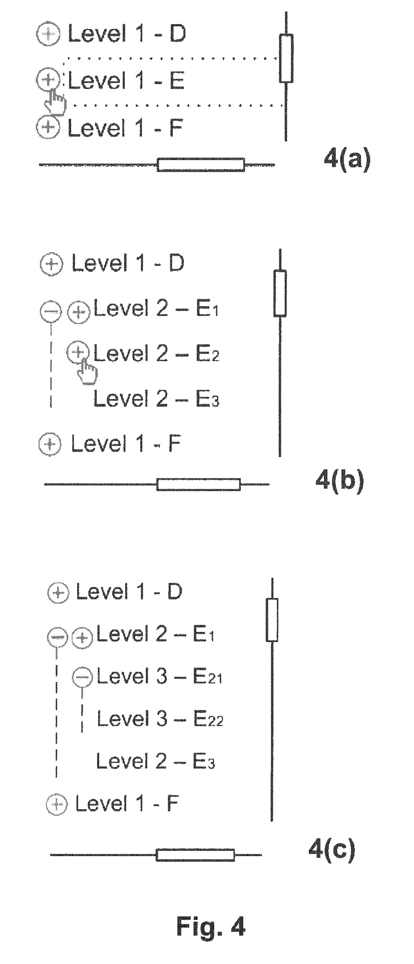

Fig. 4 shows another embodiment where the selectable icons are plus and minus symbols, i.e., ⊕ and ⊖, rather than the arrow as shown in the previous embodiments. The plus symbol indicates that there exist available graphical objects associated with a lower hierarchical level, and the minus symbol shows that the respective graphical object associated with an upper hierarchical level has been selected and expanded. For example, upon selection of the plus symbol next to the graphical object "Level 1-E" shown in Fig. 4(a), the graphical objects associated with a lower hierarchical level from this selected object is expanded. As shown in Fig. 4(b), the graphical object "Level 1-E" itself is accordingly replaced by the graphical objects with the lower hierarchical level (e.g. a second level). At the same time, the plus symbol is changed into a minus symbol, which shows the user about the finished selection.

Moreover, the plus symbols next to the graphical objects of the second level, "Level 2-E₁" and "Level 2-E₂", indicate that there are more selectable levels. For example, as shown in Fig. 4(c), upon selection of the graphical object "Level 2-E₂", the graphical objects associated with an even lower hierarchical level (e.g. a third level) are expanded and displayed, which replaces the graphical object "Level 2-E₂". Similarly, the plus symbol next to the graphical object "Level 2-E₂" becomes a minus symbol.

A dotted line or any other symbols can be shown together with the minus symbol to indicate the length of list of the graphical objects. In this way, the graphical user interface can provide a user with clearer information about the lists of the hierarchical graphical objects and thus make the use of the objects easier and more effective. It should be noted that any other identifier that improves the clarity of the graphical user interface and the interactive use of a user on the graphical user interface can be added for different demands and situations.

In addition, different from Fig. 3(c), the graphical objects associated with the third hierarchical level displayed in Fig. 4(c) are not indented, but rather aligned with the higher hierarchical level, i.e., the second level. With this improvement, the exemplary graphical user interface shown in Fig. 4 can further save some display space in the horizontal direction, in addition to the reduced space in the vertical direction. Moreover, a horizontal scroll bar can also be used in the graphical user interface to further improve the display of the graphical user interface in a display device with a limited size. It should be noted that the hierarchical graphical objects can be displayed in any suitable formality.

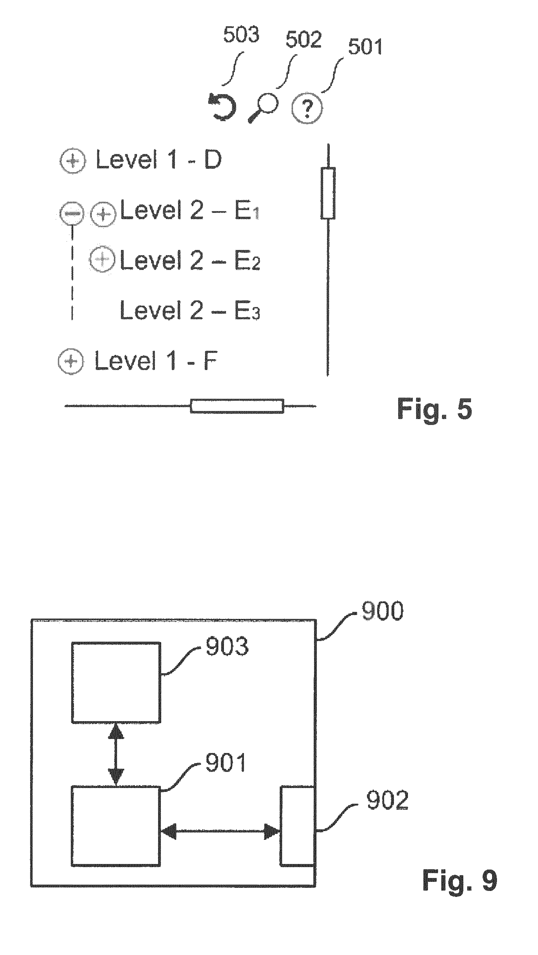

When activated for viewing, the graphical user interface proposed in the present principles can also present additional icons or graphical representation for any supplementary desirable functions, which can further improve the graphical user interface. For example, as shown in Fig. 5, the graphical user interface can present a question or help icon 501, a search icon 502 and a return icon 503, which are commonly displayed and used in the user interfaces available in the field. The size, color, location and other characteristics of the supplementary icons are of course flexible and can be arbitrarily changed corresponding to different demands.

A further possibility is a menu on "mouse hover". In the case where the cursor or a mouse pointer is over, for example the "Level 2- E₂", some symbols or visual representation, e.g., the name of the parent object "Level 1-E" here, can appear close to the mouser pointer. In addition, the proposed graphical user interface in the present principle can of course be integrated with any existing user interface when the combination is suitable and compatible.

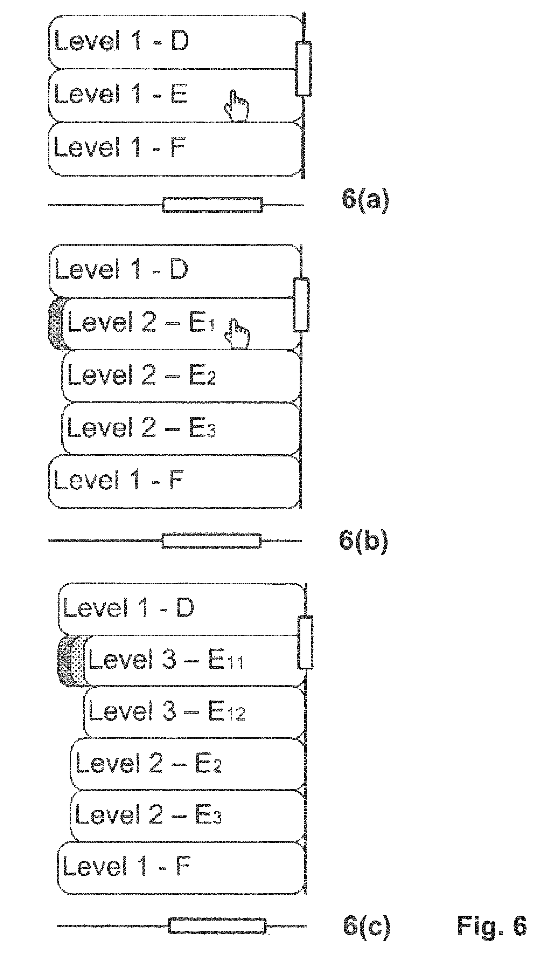

Fig. 6 shows another embodiment of a graphical user interface proposed according to the present principles. The embodiment differs from the above mentioned embodiments in that each of the graphical objects is displayed with a frame around it. The icons shown on the left hand side of the graphical objects are omitted here merely to reduce the complexity of the drawings and provide a clearer explanation.

Similarly, Fig. 6(a) shows three graphical objects associated with a top hierarchical level, among other graphical objects in the same level which can be shown when a user uses the scroll bar to explore the list. Upon a selection of the graphical object "Level 1-E", for example, by clicking on the graphical object with the help of a cursor, the graphical objects associated with a lower hierarchical level are displayed, as shown in Fig. 6(b). It can be clearly seen that, in this embodiment, only a major portion of the original graphical object "Level 1-E" is replaced, rather than the whole graphical object. The minor portion of the original graphical object "Level 1-E", i.e., the remaining portion, can be optionally displayed with a different appearance or with one or more identifiers. In Fig. 6(b), the remained portion of the original graphical object "Level 1-E" is filled with a dark gray color. Of course, any other color or patterns or identifies can also be used.

Fig. 6(c) shows the resulting graphical user interface after a selection of the graphical object "Level 2-E₁" associated with the second hierarchical level. Two graphical objects associated with a third hierarchical level, "Level 3-E₁₁" and "Level 3-E₁₂", are displayed, and a portion of the selected graphical object "Level 2-E₁" is replaced. Similarly, the remaining portion of the selected graphical object can be identified and changed to indicate and remind the user about the finished selection and the hierarchical structure of the graphical objects. Here, the remaining portion of the graphical object "Level 2-E₁" is filled with a light gray color, which is different from the color of the first selected graphical object "Level 1-E" to especially indicate the different hierarchical levels. Of course, the identifiers or appearance change for different hierarchical levels can be same or different and can be arbitrarily decided for different demands and preferences.

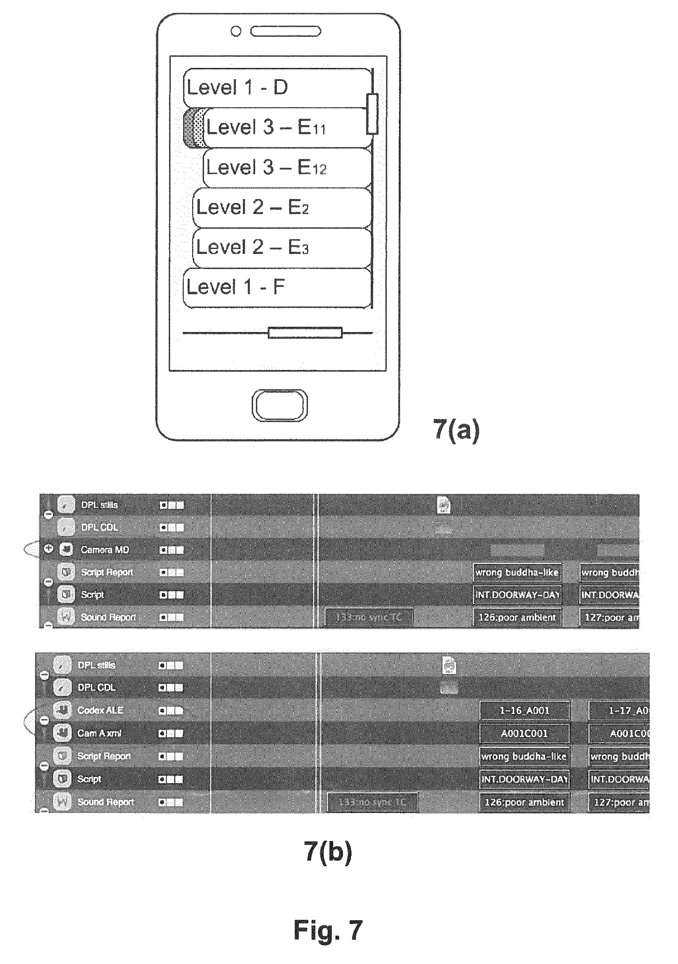

Fig. 7(a) shows an exemplary embodiment where the graphical user interfaces described in Fig. 6 is applied on an exemplary mobile device. It is known that the size of a display screen on a mobile device is limited, in either the horizontal or vertical direction. By using the graphical user interfaces proposed in the present principles, the hierarchical graphical objects can be well organized and displayed on the display or screen of a mobile device, providing a clear and comfortable experience for a user.

Fig. 7(b) shows another exemplary embodiment where a graphical user interface described according to the present principles is applied to show data items or metadata, for example, in any kind of metadata management software.

Upon a selection of the graphical object associated with the data item "Camera MD", two graphical objects with a lower hierarchical level are displayed to replace the selected "Camera MD". Accordingly, the plus symbol ⊕ is changed to the minus symbol ⊖ to indicated the selection to a user. In addition, in this embodiment, there are some more symbols or identifiers shown between the plus/minus symbols and the text/title of the graphical objects. These additional symbols, for example, represent and show the various categories of the respective graphical objects, and provide an even clearer and simple graphical user interface. Moreover, different grey gradients can also be used here. For example, a grey vertical bar can be shown on the very left side of the line (like an "I") and can be black for level 1, dark grey for level 2, grey for level 3, and the like. In other words, the deeper the layer, the lighter the grey, which can provide an easily-understood and -noticed graphical user interface. In this way, the shape of the symbols or identifiers does not need to change from level to level. Of course, any other change or modification of the visual appearance of the symbols or identifiers can also be used here for different demands and designs.

Referring to Fig. 8, a method of displaying a graphical user interface comprising hierarchical graphical objects is illustrated. The method includes displaying 801 a first set of graphical objects associated with an upper hierarchical level in the graphical user interface. The method further includes detecting 802 a selection of one of the displayed graphical objects. In response to said selection, the method includes displaying 803 a second set of graphical objects associated with a lower hierarchical level in the graphical user interface. In particular, the second set of graphical objects replaces at least a portion of the selected and originally displayed graphical object of the first set of graphical objects.

As shown in the exemplary embodiments in Figs. 2-6, each of the graphical objects can include one or more selectable icon. The selection of one of the graphical objects can thus be performed by a selection of the respective selectable icon associated with the target graphical object. In the alternative, each of the graphical objects can be itself a selectable icon, and the selection can thus be performed by a user conducting a selection of the respective graphical object.

In one embodiment, the graphical objects can have a tree structure. The first set of graphical objects associated with the upper hierarchical level can represent a group of nodes of the tree structure that are at a same upper level. The second set of graphical objects associated with the lower hierarchical level can represent a group of nodes of the tree structure that are at a same lower level arranged as a child of the upper level.

Referring to Fig. 9, one exemplary embodiment of an apparatus 900 configured to implement and support the displaying of the graphical user interface as shown in Figs. 2-6 and the method in Fig. 8 is illustrated. The apparatus includes an operation unit 901, a graphical user interface 902, and a storage unit 903.

The graphical user interface 902 is configured to provide and display hierarchical graphical objects which include a first set of graphical objects associated with an upper hierarchical level and a second set of graphical objects associated with a lower hierarchical level. For example, the graphical user interface 902 can be one of the exemplary graphical user interfaces as shown in Figs. 2-6. In addition, the graphical user interface 902 provides an interaction function and operation for a user to interact with the graphical user interface 902 to select one of the graphical objects and accordingly change the display of the graphical user interface. In other words, the graphical user interface 902 is further configured to detect a selection of one of the hierarchical graphical objects.

In one embodiment, the hierarchical graphical objects in the graphical user interface 902 can be associated with and represent a hierarchical dataset. Each of the hierarchical graphical objects can represent one data item in the hierarchical dataset. The operation unit 901 is configured to provide an access for a user to the hierarchical dataset through the graphical user interface 902. For example, upon selection of one of the graphical objects in the graphical user interface 902, the user can select the respective data item in the hierarchical dataset. The hierarchical dataset can optionally be stored in the storage unit 903 and be retrieved by the operation unit 901 upon receipt of a user selection of one of the graphical objects in the graphical user interface 902.

In one embodiment, the operation unit 901 can be a processing device such as a processor adapted to perform the steps according to one of the above mentioned methods. For example, the adaption includes that the processor is configured, e.g. programmed, to perform steps according to one of the described methods. A processor as used here may include one or more processing units, such as microprocessors, digital signal processors, or a combination thereof.

In one embodiment, the storage unit 903 can be a memory device that includes volatile and/or non-volatile memory regions and storage devices such as hard disk drives and DVD drives. A part of the memory device can be a non-transitory program storage device readable by the above mentioned processing device, tangibly embodying a program of instructions executable by the processing device to perform program steps as described herein according to the present principles.

The foregoing illustrates the principles of the disclosure and it will thus be appreciated that those skilled in the art will be able to devise numerous alternative arrangements which, although not explicitly described herein, embody the principles and are within its scope. It is therefore to be understood that numerous modifications can be made to the illustrative embodiments and that other arrangements can be devised without departing from the scope of the present principle as defined by the appended claims.

## Claims

1. A method of displaying a graphical user interface comprising hierarchical graphical objects, the hierarchical graphical objects comprising a first set of graphical objects associated with an upper hierarchical level and a second set of graphical objects associated with a lower hierarchical level, the method comprising:
displaying (801) the first set of graphical objects;
detecting (802) a selection of one of the displayed graphical objects; and
in response to the selection,
displaying (803) the second set of graphical objects, wherein the second set of graphical objects replaces at least a portion of the selected graphical object of the first set of graphical objects.

2. The method of claim 1, wherein the hierarchical graphical objects have a tree structure, the first set of graphical objects representing a group of nodes of the tree structure that are at a same upper level, the second set of graphical objects representing a group of nodes of the tree structure that are at a same lower level arranged as a child of the upper level.

3. The method of claim 1 or 2, wherein each of the hierarchical graphical objects comprises a selectable icon, said selection of one of the displayed graphical objects being performed by a selection of the respective selectable icon associated with the selected graphical object.

4. The method of claim 3, wherein each of the hierarchical graphical objects is a selectable icon, said selection of one of the displayed hierarchical graphical objects being performed by a selection of the respective selectable graphical object.

5. The method of claim 3, wherein, in response to the selection of the respective selectable icon, at least one characteristic of the selected icon is changed.

6. The method of claim 5, wherein the at least one characteristic is a visual characteristic related to the visual appearance of the selected icon.

7. An apparatus (900), comprising a graphical user interface (902) configured to display hierarchical graphical objects, the hierarchical graphical objects comprising a first set of graphical objects associated with an upper hierarchical level and a second set of graphical objects associated with a lower hierarchical level,
wherein, upon detection of a selection of one of the first set of graphical objects displayed in the graphical user interface, the second set of graphical objects is displayed to replace at least a portion of the selected graphical object of the first set of graphical objects.

8. The apparatus of claim 7, wherein each of the hierarchical graphical objects comprises a selectable icon, said selection of one of the first set of graphical objects being performed by a selection of the respective selectable icon associated with the selected graphical object.

9. The apparatus of claim 8, wherein each of the hierarchical graphical objects is a selectable icon, said selection of one of the displayed graphical objects being performed by a selection of the respective selectable graphical object.

10. The apparatus of one of claims 7-9, further comprising:
an operation unit (901) configured to provide an access to a hierarchical dataset associated with the hierarchical graphical objects displayed in the graphical user interface (902), each of the hierarchical graphical objects representing one data item in the hierarchical dataset.

11. The apparatus of claim 10, further comprising:
a storage unit (903) configured to store the hierarchical dataset.

12. A computer readable storage medium having stored therein instructions for displaying a graphical user interface comprising hierarchical graphical objects, which when executed by a computer, cause the computer to:
display a first set of the hierarchical graphical objects associated with an upper hierarchical level;
detect a selection of one of the displayed graphical objects; and
in response to the selection,
display a second set of the hierarchical graphical objects associated with a lower hierarchical level, wherein the second set of graphical objects replaces at least a portion of the selected graphical object of the first set of graphical objects.
